# EUROPÄISCHE PATENTSCHRIFT

(11) **EP 1 857 422 B1**
(45) Veröffentlichungstag und Bekanntmachung des Hinweises auf die Patenterteilung: **10.07.2013**
(21) Anmeldenummer: 07009289.5
(22) Anmeldetag: 09.05.2007
(51) Int. Cl.: C03B 29/08, C03B 13/04, C03B 32/02

(54) **Verfahren zur Herstellung von Glaskeramik-Artikeln mit feuerpolierter Oberfläche**
Method for manufacturing glass-ceramic articles with fire polished surface
Procédé de fabrication d'articles vitrocéramiques ayant une surface polie au feu

(30) Priorität: 16.05.2006 DE 102006023078
(43) Veröffentlichungstag der Anmeldung: 21.11.2007
(73) Patentinhaber: Schott AG, 55122 Mainz (DE)
(72) Erfinder: Wölfing, Bernd, Dr., 55124 Mainz (DE); Bonitz, Ralf, Dr., 55271 Stadecken-Elsheim (DE); Schäfer, Martin, 55246 Mainz-Kostheim (DE); Biertümpfel, Ralf, Dr., 55252 Mainz-Kastel (DE); Semar, Wolfgang, Dr., 55129 Mainz (DE); Hahn, Michael, 65329 Hohenstein (DE); Surges, Nicole, 55411 Bingen (DE); Kraus, Thomas, 55271 Stadecken-Eisheim (DE); Best, Reiner, 55234 Albig (DE)
(74) Vertreter: Herden, Andreas F.

(56) Entgegenhaltungen:
- EP-A- 1 146 018
- WO-A-2006/061243
- GB-A- 721 703
- JP-A- 2002 154 837
- US-A- 2 032 009
- US-A- 3 841 856
- US-A- 4 214 886

## Beschreibung

Die Erfindung betrifft allgemein die Herstellung von Glaskeramik, insbesondere Maßnahmen zur Verringerung der Oberflächenrauhigkeit.

Glaskeramik-Platten werden verbreitet unter anderem als Herdplatten oder als Brandschutzglas, beispielsweise als Fenster oder Sichtscheibe für Kaminöfen eingesetzt. Insbesondere für eine Verwendung als Fenster ist es dabei wünschenswert, wenn eine Glaskeramik-Platte möglichst durchsichtig ist. Neben den inneren Eigenschaften der Glaskeramik ist dabei die Rauhigkeit der Oberfläche von besonderer Bedeutung.

Die Heißformgebung von Glaskeramikplatten erfolgt üblicherweise aus einem Grünglas, welches mit einem Walzprozess geformt wird. Dabei wird der Oberfläche des Grünglases eine gewisse Rauhigkeit aufgeprägt, die sich aufgrund der hohen Temperatur des Glases direkt nach dem Walzen noch etwas glätten kann. Das gegebene Temperatur-Zeit-Profil reicht jedoch nicht aus, um eine vollständige Glättung zu erzielen. Typische Rauhigkeitswerte liegen bei einer mittleren Rauhigkeit von 0,1 bis 0,2µm.

Neben der Keramisierung von einzelnen Scheiben kann auch ein kontinuierliches Glasband aus einem vorgeschalteten Glasformprozess keramisiert werden. Ein solches Verfahren ist aus dem US-Patent 3 841 856 bekannt.

Die GB 721 703 und US 2 032 009 beschreiben das Feuerpolieren von kontinuierlichen Flachglas-Bändern.

Weiterhin ist aus der EP 1 146 018 A1 bekannt, gefloatete Flachgläser zu keramisieren. Floatgläser weisen im Allgemeinen eine glatte, feuerpolierte Oberfläche auf. Allerdings eignen sich nicht alle Gläser für dieses Verfahren und durch das Floatbad können gegebenenfalls unerwünschte Rückstände, wie insbesondere Zinnoxid auf der Glasoberfläche verbleiben.

Um glatte Glaskeramik-Oberflächen zu erhalten, wird in der WO 2006/061243 A2 eine levitierende Lagerung der Platten auf einem Gaskissen während der Keramisierung vorgeschlagen.

Der Erfindung liegt die Aufgabe zugrunde, Glaskeramik-Artikel mit hinsichtlich der Rauhigkeit verbesserter Oberfläche bereitzustellen. Diese Aufgabe wird bereits in höchst überraschend einfacher Weise durch den Gegenstand der unabhängigen Ansprüche gelöst. Vorteilhafte Ausgestaltungen und Weiterbildungen sind in den abhängigen Ansprüchen angegeben.

Demgemäss sieht die Erfindung ein Verfahren zur Herstellung von Glaskeramik-Scheiben vor, bei welchem eine Grünglas-Scheibe oder -Platte durch Heißformung hergestellt und die Grünglas-Scheibe anschließend zu einer Glaskeramik keramisiert wird, wobei die Scheibe in einem Zwischenschritt auf zumindest einer Fläche feuerpoliert wird.

Die Grünglas-Scheibe kann dabei auch ein kontinuierliches Band sein, welches später in einzelne Scheiben zerlegt wird. Demgemäß ist gemäß einer Ausführungsform der Erfindung vorgesehen, die Feuerpolitur gleich an einem kontinuierlichen, durch Heißformung hergestellten Grünglas-Band durchzuführen.

Das Feuerpolieren erfolgt dabei an der Grünglasscheibe vor der Keramisierung.

In weiterer Ausgestaltung der Erfindung erfolgt das Feuerpolieren vor dem Einführen in einen Kühlofen, in welchem die heißgeformte Glasscheibe kontrolliert abgekühlt wird. Dies ist von Vorteil, da hier noch die ohnehin aus dem Heißformprozeß stammende Erwärmung der Scheibe für die Feuerpolitur ausgenutzt werden kann. Bei einer entsprechenden Vorrichtung zur Herstellung eines Zwischenprodukts für die Herstellung von Glaskeramik-Scheiben oder einer Vorrichtung zur Herstellung von Glaskeramik-Scheiben ist dabei dementsprechend ein der Heißform-Vorrichtung nachgeschalteter Kühlofen vorgesehen, wobei die Einrichtung zum Feuerpolieren für das Feuerpolieren zumindest einer Oberfläche von mit der Heißform-Vorrichtung geformten Scheiben vor dem Einführen in den Kühlofen ausgebildet ist. Der Kühlofen dient für eine kontrollierte Abkühlung der Scheibe zur Vermeidung von Spannungen. Ist die Heißform-Vorrichtung zur Herstellung eines kontinuierlichen Grünglas-Bands und die Einrichtung zum Feuerpolieren für das Feuerpolieren des Grünglas-Bands eingerichtet, kann dabei die Einrichtung zum Feuerpolieren insbesondere zwischen Heißform-Vorrichtung und Kühlofen angeordnet, oder auch in den Kühlofen integriert sein.

Es hat sich als besonders vorteilhaft herausgestellt, wenn die Grünglas-Scheibe während der auf die Heißformung folgenden Abkühlung vor Erreichen einer Temperatur, bei welcher Keimbildung einsetzt, feuerpoliert wird. Dies ermöglicht die Herstellung klarer, beziehungsweise ungetrübter Glaskeramik mit feuerpolierter Oberfläche. Wird ansonsten erst nach erfolgter Abkühlung unter diese Temperatur, beispielsweise im Kühlofen bis auf Raumtemperatur eine Feuerpolitur durchgeführt, so führt die damit verbundene erneute Erwärmung zu einer zusätzlichen Keimbildung. Die zusätzlichen Keime können dann aufgrund der sich bei der Keramisierung um die Keime bildenden Kristalle eine Trübung der Glaskeramik verursachen. Unter einer klaren oder ungetrübten Glaskeramik wird dabei nicht nur farblos transparente, sondern auch gefärbte Glaskeramik, wie etwa die vielfach verwendete volumengefärbte Glaskeramik mit rot- bis rotbrauner Tönung verstanden.

Es wird aber nicht ausgeschlossen auch Scheiben, die kühler sind, als die untere Temperatur, bei welcher eine Keimbildung einsetzt, erfindungsgemäß zu polieren. Dies ist zum Beispiel dann denkbar, wenn eine trübe, undurchsichtige Anmutung gerade gewünscht wird, oder wenn die Aufheizung so schnell erfolgt, daß die Keimbildung unterdrückt wird.

Eine erfindungsgemäße Vorrichtung zur Herstellung von Glaskeramik-Scheiben, die insbesondere zur Durchführung des vorstehenden Verfahrens geeignet ist, umfasst eine Heißform-Vorrichtung zur Herstellung von Grünglas-Scheiben und einen Keramisierungsofen zur Keramisierung der Grünglas-Scheiben, sowie eine Einrichtung zum Feuerpolieren zumindest einer Oberfläche von mit der Heißform-Vorrichtung geformten Grünglas-Scheiben.

Entsprechend der besonders bevorzugten Ausgestaltung des erfindungsgemäßen Verfahrens ist bei der Vorrichtung die Einrichtung zum Feuerpolieren vorzugsweise entlang des Transportweges der Grünglas-Scheiben so nahe bei der Heißform-Vorrichtung angeordnet, daß die Glasscheiben noch heißer als die Temperatur sind, bei welcher bei der Abkühlung die Keimbildung einsetzt.

Grünglas-Herstellung und Keramisierung müssen nicht zwangsläufig in einer gemeinsamen Anlage hergestellt werden. Demgemäß betrifft die Erfindung auch ein Verfahren und eine Vorrichtung zur Herstellung eines Zwischenprodukts für die Glaskeramik-Herstellung, bei welchem eine Grünglas-Scheibe durch Heißformung hergestellt und die Grünglas-Scheibe auf zumindest einer Fläche feuerpoliert wird, sowie ein damit herstellbares Zwischenprodukt für die Herstellung von Glaskeramik-Scheiben, umfassend eine auf zumindest einer Seite feuerpolierte Grünglas-Scheibe. Eine Vorrichtung zur Herstellung eines Zwischenprodukts für die Herstellung von Glaskeramik-Scheiben, insbesondere mit dem erfindungsgemäßen Verfahren umfasst dazu eine Heißform-Vorrichtung zur Herstellung von Grünglas-Scheiben und eine Einrichtung zum Feuerpolieren zumindest einer Oberfläche von mit der Heißform-Vorrichtung geformten Grünglas-Scheiben.

Unter einer Heißformgebung, beziehungsweise einem Heißformgebungsverfahren werden alle Verfahren verstanden, bei denen die Form, oder die Oberfläche einer Glasschmelze oder eines Glaskörpers bei einer Temperatur geändert wird, die so hoch ist, daß eine ausreichende Erweichung des Glases stattfindet, um die Formänderungen zu ermöglichen. Eine Heißform-Vorrichtung umfasst dementsprechend die für diese Verfahren benötigten Einrichtungen. Im Sinne der Erfindung umfaßt das Hußformen das Walzen einer Grünglas-Scheibe.

Es hat sich bezüglich der Erfindung überraschend gezeigt, daß sich die durch das Feuerpolieren hergestellte glattere Oberfläche auch im Verlauf der Keramisierung erhält, so daß die Feuerpolitur bereits vor der Keramisierung, zumindest vor deren Abschluß vorgenommen werden kann.

Vorzugsweise ist die Einrichtung zum Feuerpolieren so ausgebildet, daß die zu polierende Fläche der Grünglas-Scheibe heißer wird, als innere Bereiche der Grünglas-Scheibe. Um die Grünglas-Scheibe bei der Feuerpolitur so zu erwärmen, daß die zu polierenden Fläche der Grünglas-Scheibe heißer wird, als innere Bereiche der Grünglas-Scheibe, werden daher Heizverfahren bevorzugt, welche möglichst nur die Oberfläche des Grünglases erwärmen. Insbesondere wird bevorzugt, daß die Erwärmung bei der Feuerpolitur so durchgeführt wird, daß die Grünglas-Scheibe formstabil bleibt. Damit wird eine nachträgliche Verformung vermieden. Insbesondere kann dann auch auf eine aufwendige Lagerung der Grünglasscheibe zur Vermeidung von Verformungen entfallen.

Besonders überraschend zeigte sich, daß eine Verbesserung der Oberfläche hinsichtlich der Rauhigkeit auch erhalten bleibt, selbst wenn die Grünglas-Platte mit einer feuerpolierten Fläche während der Keramisierung auf einer Unterlage gelagert wird. Obwohl die Glaskeramik bei der Keramisierung sehr weich wird und man erwarten würde, daß sich die Rauhigkeit der Unterlage auf die Glaskeramik-Scheibe überträgt, zeigt sich eine verminderte Rauhigkeit, wenn die Auflageseite feuerpoliert war. Dementsprechend ist gemäß einer Weiterbildung der Erfindung auch vorgesehen, die Grünglas-Scheibe beidseitig zu feuerpolieren.

Besonders geeignet für das Feuerpolieren ist das Erwärmen der zu polierenden Fläche mit einem Gasbrenner. Ein direkter Kontakt mit den Flammen kann vorteilhaft durch den Einsatz eines Porenbrenners vermieden werden.

Auch das Erwärmen der zu polierenden Fläche mit einem elektrisch beheizten Strahler kann für die Feuerpolitur eingesetzt werden. Insbesondere können die vorstehend genannten Verfahren, beziehungsweise entsprechende Einrichtungen für das Erwärmen zur Erzielung einer Feuerpolitur auch miteinander kombiniert werden. Beispielsweise kann eine Vorerwärmung mit einem Gasbrenner erfolgen, wobei das oberflächliche Aufschmelzen schließlich mit einem Infrarotstrahler erfolgt. Auf diese Weise kann beispielsweise ein Strahler niedrigerer Leistung verwendet oder bei gegebener Leistung die pro Zeiteinheit behandelte Fläche erhöht werden, um die Produktionskosten zu senken.

Allgemein kann dementsprechend das Feuerpolieren das oberflächliche Aufschmelzen bei vorgeheizter Grünglas-Scheibe umfassen. Vorzugsweise ist dabei die Grünglas-Scheibe auf zumindest 500 °C, vorzugsweise zumindest 600 °C vorgeheizt. Dies ist nicht nur günstig, um ein schnelleres Aufschmelzen für das Feuerpolieren zu erreichen, außerdem wird auch die Gefahr des Auftretens von Spannungsrissen verringert.

Ist die Grünglas-Scheibe nicht bereits durch den Heißformprozeß vorgeheizt, kann bei einer erfindungsgemäßen Vorrichtung auch eine zusätzliche Einrichtung zum Vorheizen der Grünglas-Scheibe, insbesondere zum Vorheizen auf eine Temperatur von zumindest 500 °C vorgesehen werden.

Um eine Feuerpolitur zu erreichen kann die Grünglas-Scheibe, insbesondere in bereits vorgeheiztem Zustand zum Feuerpolieren oberflächlich auf zumindest 900 °C, bevorzugt über 1000 °C erhitzt werden.

Das Heißformen der Grünglas-Scheibe umfasst das Walzen einer Grünglas-Scheibe, wobei das Feuerpolieren erfindungsgemäß nach dem Walzen durchgeführt wird. Die erfindungsmgemäße Vorrichtung umfasst dementsprechend die Heißform-Vorrichtung dementsprechend eine Walzeinrichtung. Walzen ist, wie bereits eingangs erwähnt, die StandardMethode zur Herstellung von Grünglas-Scheiben. Auf diese Weise kann die Erfindung leicht in bestehende Anlagen integriert werden. Walzen bietet bei der Herstellung von Glaskeramik besondere Vorteile gegenüber anderen Heißform-Verfahren, wie beispielsweise Floaten. Zwar weisen durch Floaten hergestellten Scheiben im allgemeinen eine glattere Oberfläche auf, allerdings eignen sich für dieses Verfahren nur bestimmmte Glaszusammensetzungen, die auch keramisiert werden können. Demgegenüber können durch Walzen nahezu beliebige Gläser heißgeformt werden, so daß kaum Beschränkungen hinsichtlich einer gewünschten Glaszusammensetzung bestehen. Mittels der Erfindung können nun auch gewalzte Glaskeramik-Platten mit einer sehr hohen Oberflächenqualität hergestellt werden.

Gemäß einer Ausführungsform der Erfindung wird die Grünglas-Scheibe vor dem Einführen in einen Keramisierungsofen feuerpoliert. Dazu wird dementsprechend eine Einrichtung zum Feuerpolieren der Heißformstrecke nachgeschaltet und dem Keramisierungsofen vorgeschaltet.

Gemäß einer weiteren Ausführungsform der Erfindung kann das Feuerpolieren auch zumindest teilweise in einem Keramisierungsofen durchgeführt werden. Dazu wird dementsprechend eine Einrichtung zum Feuerpolieren der Grünglas-Scheibe im Keramisierungsofen vorgesehen. Beispielsweise kann ein Infrarotstrahler die zu polierende Fläche des Grünglases durch ein Fenster oder eine Öffnung hindurch überstreichen. So ist daran gedacht, das Feuerpolieren vor Erreichen der Keimbildungstemperatur durchzuführen.

Eine Glaskeramik-Scheibe, welche mittels eines erfindungsgemäßen Verfahrens oder einer entsprechenden Vorrichtung herstellbar ist, zeichnet sich gegenüber den mit bisher verwendeten Herstellungsverfahren erhaltenen Scheiben durch eine geringere Rauhigkeit der Glaskeramik-Oberfläche aus. Wird beispielsweise das erfindungsgemäße Verfahren oder die Vorrichtung zur Herstellung einer Feuerschutzverglasung, insbesondere einer Kaminsichtscheibe oder einer Brandschutzverglasung verwendet, so zeichnen sich diese Produkte durch eine bessere Durchsichtigkeit aus. Auch bei der Verwendung der Erfindung zur Herstellung von Glaskeramik-Kochplatten ergeben sich aber aus der verbesserten Oberflächenqualität verschiedene ästhetische Vorteile. Auf diese Weise können Kochplatten mit glänzenderer Anmutung hergestellt werden.

Die Erfindung wird nachfolgend genauer anhand bevorzugter Ausführungsformen und unter Bezugnahme auf die beigefügten Zeichnungen näher erläutert. Dabei verweisen gleiche Bezugszeichen auf gleiche oder äquivalente Teile. Es zeigen:
- Fig. 1: in schematischer Ansicht ein Ausführungsbeispiel einer Vorrichtung zur Durchführung des erfindungsgemäßen Verfahrens,
- Fig. 2: eine Variante des in Fig. 1 gezeigten Ausführungsbeispiels,
- Fig. 3: ein Diagramm der spektralen Absorption zweier Grüngläser und spektrale Verläufe der Leistung eines thermischen Strahlers bei verschiedenen Temperaturen,
- Fig. 4: Verfahrensschritte gemäß einer Weiterbildung der Erfindung,
- Fig. 5: ein Ausführungsbeispiel der Erfindung mit einem Porenbrenner als Bestandteil einer Einrichtung zum Feuerpolieren,
- Fig. 6: eine Aufnahme einer erfindungsgemäß behandelten Grünglas-Scheibe.

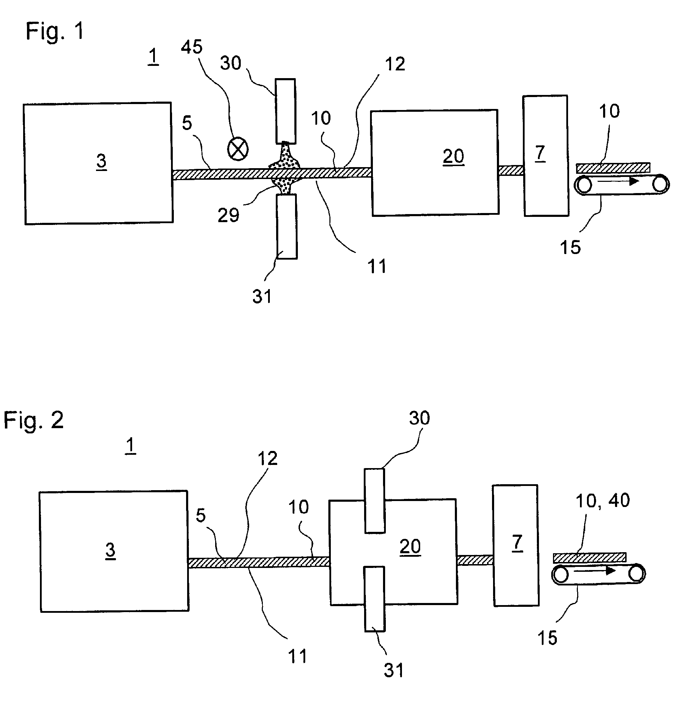

In Fig. 1 ist in schematischer Darstellung eine als Ganzes mit dem Bezugszeichen 1 bezeichnete Vorrichtung zur Herstellung von Glaskeramik-Scheiben mittels des erfindungsgemäßen Verfahrens, umfassend eine symbolisch dargestellte Heißform-Vorrichtung 3 zur Herstellung von Grünglas-Scheiben und einen Kühlofen 20 zur Temperung der Grünglas-Scheiben, sowie eine Einrichtung zum Feuerpolieren zumindest einer Oberfläche der mit der Heißform-Vorrichtung 3 geformten Grünglas-Scheiben. Mit der Heißform-Vorrichtung 3 wird dabei zunächst ein kontinuierliches Band 5 des Grünglases hergestellt. Dazu umfasst die Heißform-Vorrichtung 3 eine Walzeinrichtung.

Bei dem in Fig. 1 gezeigten Beispiel umfasst die Einrichtung zum Feuerpolieren zwei Gasbrenner 30, 31. Mit den die Oberfläche überstreichenden Flammen 29 dieser Brenner 30, 31 wird das Grünglas-Band 5 beidseitig auf den gegenüberliegenden Flächen 11, 12 feuerpoliert.

Anschließend erfolgt im Kühlofen 20 eine kontrollierte Abkühlung des Grünglas-Bands 5, die ein nachfolgendes Zerteilen in einzelne Grünglas-Scheiben 10 mittels einer Zerteileinrichtung 7 gestattet. Bei dem in Fig. 1 gezeigten Beispiel werden die feuerpolierten Grünglasscheiben 10 nach der Zerteileinrichtung 7 auf einem Transportband 15 abgelegt. Die Grünglas-Scheiben 10 können dann in einem Keramisierungsofen zu Glaskeramik-Platten keramisiert werden.

Damit wird ein Zwischenprodukt für die Herstellung von Glaskeramik-Scheiben in Form einer auf zumindest einer Seite, in diesem Fall beidseitig auf gegenüberliegenden Flächen 11, 12 feuerpolierten Grünglas-Scheibe 10 erhalten. Bei dem in Fig. 1 gezeigten Beispiel werden die Grünglas-Scheiben 10 demgemäss also vor dem Einführen in den Kühlofen 20 feuerpoliert. Das Feuerpolieren wird dabei insbesondere durchgeführt, bevor das Grünglas-Band 5 eine obere Temperatur erreicht, bei welcher eine Keimbildung einsetzt. Auf diese Weise wird eine zusätzliche Keimbildung, die später zu einer Trübung der Glaskeramik führen kann, vermieden.

In alternativer Ausgestaltung kann anstelle des Kühlofens 20 auch ein Keramisierungsofen vorgesehen sein. Die Feuerpolitur wird dann vor dem Einführen des Bands 5 oder vereinzelter Grünglas-Scheiben 10 in den Keramisierungsofendurchgeführt.

Die Brenner 30, 31 emittieren Infrarotstrahlung mit einer Wellenlänge von über 10 µm. In diesem Spektralbereich ist das Grünglas sehr stark absorbierend. Demgemäss wird die Grünglas-Scheibe bei der Feuerpolitur durch die Brenner 30, 31 so erwärmt, dass die zu polierende Fläche 11 der Grünglas-Scheibe heißer wird, als innere Bereiche der Grünglas-Scheibe. Insbesondere wird eine nahezu rein oberflächliche Erhitzung erreicht, so dass die Grünglas-Scheibe nur oberflächlich aufschmilzt. Dabei wird die Grünglas-Scheibe 10 oberflächlich auf zumindest 900 °C, bevorzugt über 1000 °C erhitzt.

Um das Aufschmelzen für die Feuerpolitur zu erleichtern, ist es von Vorteil, wenn das Feuerpolieren dabei das oberflächliche Aufschmelzen bei vorgeheizter Grünglas-Scheibe 10 umfasst. Die Vorheizung kann insbesondere die aus dem Heißformungsprozess verbleibende Wärme sein. Es kann aber auch optional eine zusätzliche Vorheizeinrichtung 45 vorgesehen werden. Durch die oberflächliche Erwärmung bleiben die Grünglas-Scheiben 10 auch formstabil. Vorzugsweise wird die Feuerpolitur bei einer Temperatur von zumindest 500 °C durch die Vorheizung, beispielsweise durch verbleibende Erwärmung durch den Heißformprozess und/oder durch eine separate Vorheizeinrichtung 45 vorgenommen. Damit werden auch zu große Temperaturgradienten innerhalb der Grünglas-Scheibe 10 vermieden.

Anders als in Fig. 1 dargestellt, kann das Feuerpolieren mit den Brennern 30, 31 auch auch am zerteilten Glasband 5 vorgenommen werden. Diesen beiden Fällen gemeinsam ist aber, dass die Einrichtung zum Feuerpolieren mit den Brennern 30, 31 der Heißformsvorrichtung 3 nachgeschaltet und dem Keramisierungsprozess vorgeschaltet ist.

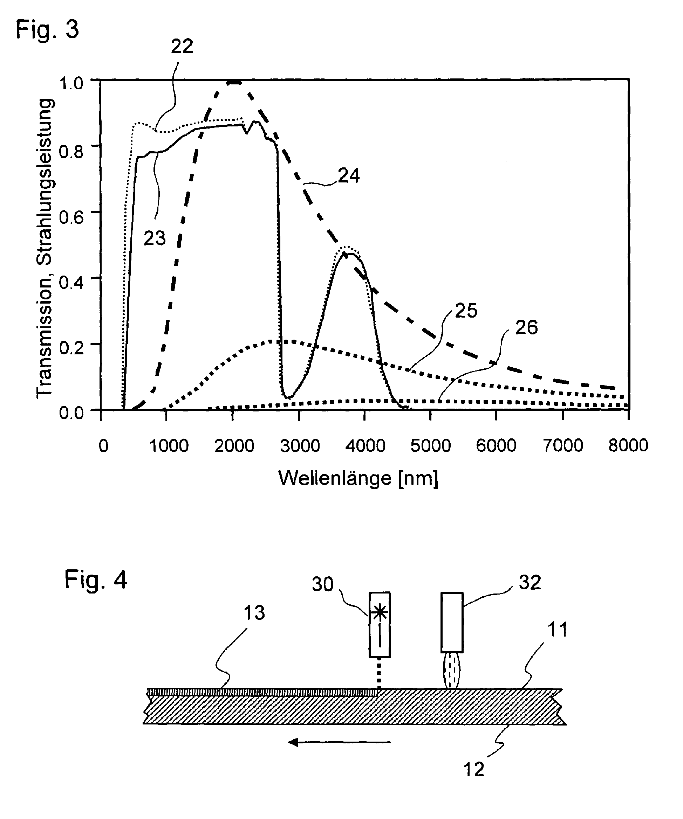

Eine im wesentlichen auf die zu polierende Fläche beschränkte Erwärmung, wie sie mit den Brennern 30, 31 erzielt werden kann, ist mit thermischen Strahlern nur schwer zu erreichen. Dazu wird auf das Diagramm der Fig. 3 Bezug genommen, in welchem der spektrale Verlauf der Transmission zweier Grüngläser der spektralen Strahlungsleistung thermischer Strahler für verschiedene Temperaturen dargestellt sind. Dabei zeigen die Kurven 22 und 23 spektrale Verläufe der Transmission zweier verschiedener Grüngläser, die Kurve 24 den spektralen Verlauf der Strahlungsleistung eines thermischen Strahlers einer Temperatur von 1200 °C, die Kurve 25 den spektralen Verlauf der Strahlungsleistung eines thermischen Strahlers einer Temperatur von 800 °C und die Kurve 26 den spektralen Verlauf der Strahlungsleistung eines thermischen Strahlers einer Temperatur von 400 °C. Wie anhand von Fig. 3 ersichtlich ist, sollte für eine sehr oberflächennahe Absorption die Strahlung eine Wellenlänge von zumindest etwa 4,5 Mikrometern aufweisen, da die Grüngläser unterhalb dieser Wellenlängen transparenter werden, während sie oberhalb von etwa 4,5 Mikrometern nahezu vollständig absorbieren, so daß die Strahlung kaum in das Glas eindringen kann. Erst bei einem thermischen Strahler mit einer Temperatur von 400 °C ist die mit der spektralen Strahlungsleistung gewichtete mittlere Wellenlänge im Bereich von 4,5 Mikrometern. In diesem Fall wäre der Strahler aber bereits kälter als ein auf 500 °C vorgeheiztes Grünglas. Mit einem solchen Strahler kann demgemäss das Grünglas nicht mehr auf hohe Temperaturen für das Aufschmelzen aufgeheizt werden.

Bei heißeren Strahlern wird die meiste Leistung bei niedrigeren Wellenlängen abgegeben. Wird ein Strahler mit einer Temperatur von 1200 °C (Kurve 24) eingesetzt, liegt das Maximum der Strahlungsleistung bei etwa 2,5 Mikrometern Wellenlänge. In diesem Bereich ist das Grünglas jedoch sehr transparent, so dass auch weiter unter der Oberfläche liegende Bereiche der Grünglas-Scheibe aufgeheizt werden. Thermische Strahler, wie beispielsweise elektrisch beheizte Strahler können aber dennoch, beispielsweise als Vorheiz-Einrichtung 45, zur Unterstützung einer anderen Einrichtung zum Feuerpolieren eingesetzt werden.

Fig. 2 zeigt eine Variante der in Fig. 1 dargestellten Ausführungsform der Erfindung. Bei dieser Variante sind die Brenner 30, 31 im Kühlofen 20 integriert. Die in Fig. 2 gezeigte Vorrichtung 1 ist demgemäss mit einer Einrichtung zum Feuerpolieren des Grünglas-Bands 5 im Kühlofen 20 ausgestattet. Damit ist es auch möglich, dass das Feuerpolieren zumindest teilweise während der Temperung durchgeführt wird, wenn der Kühlofen gleichzeitig als Keramisierungsofen ausgebildet ist, wobei entlang des Ofens dazu entsprechende Heizeinrichtungen zur Erzielung unterschiedlicher Temperaturzonen vorgesehen sind. Beispielsweise kann das Feuerpolieren vor der Keimbildungsphase erfolgen. Wird das Grünglas bei der Keramisierung auf einer Unterlage gelagert, bietet sich diese Weiterbildung der Erfindung insbesondere bei einer einseitigen Feuerpolitur der Oberseite des Grünglases an. Auf diese Weise können etwa Glaskeramik-Scheiben 40 für Kochplatten mit glatterer Oberseite hergestellt werden.

Fig. 4 zeigt Verfahrensschritte gemäß einer weiteren Ausführungsform der Erfindung. Bei dieser Ausführungsform der Erfindung werden verschiedene Verfahren zur oberflächlichen Erwärmung der Grünglas-Scheibe 10 miteinander kombiniert. Die Grünglas-Scheibe 10 wird dabei entlang des Pfeiles an mehreren Einrichtungen zur Erwärmung der Scheibe 10 vorbeigeführt, wobei die mehreren Einrichtungen zusammen eine Einrichtung zum Feuerpolieren der Fläche 11 der Scheibe 10 darstellen. Die Fläche 11 der Scheibe 10 wird bei dem in Fig. 4 gezeigten Beispiel zunächst mit einem oder mehreren Gasbrennern 32 vorerwärmt. Die vorerwärmten Bereiche der Fläche 11 werden dann an einem Infrarotstrahler 30, dessen Strahlung die Fläche 11 überstreicht, weiter erhitzt. Dabei wird die Scheibe 10 an der Oberfläche der Seite 11 kurzzeitig auf über 1000 °C erwärmt, so dass das Glas aufschmilzt und eine feuerpolierte Oberfläche erhalten wird. Der aufgeschmolzene oberflächliche Bereich der Grünglas-Scheibe 10 ist mit 13 bezeichnet.

Anders als in Fig. 4 gezeigt, können ein oder mehrere Gasbrenner 32 auch alleine oder in Verbindung mit einer anderen Erwärmungseinrichtung als Einrichtung zum Feuerpolieren eingesetzt werden. Mit Gasbrennern 32 können verglichen mit einem Strahler 32 einfacher höhere Temperaturen und Leistungen erzielt werden. Der oder die Gasbrenner 32 können mit Erdgas, Acetylen oder Wasserstoff, sowie Mischungen dieser Stoffe als Brenngase eingesetzt werden. Als Oxidationsmittel kann im einfachsten Fall Luft eingesetzt werden. Für höhere Temperaturen kann auch Sauerstoff als alleiniges Oxidationsmittel oder zur Anreicherung von Luft für die Verbrennung eingesetzt werden. Mögliche ungewollte Veränderungen der Oberfläche der Grünglas-Scheibe 10 durch reduzierende und/oder oxidierende Bedingungen in der Flamme, sowie unter Umständen die Diffusion von Wasser als Verbrennungsprodukt in das Grünglas sollten aber berücksichtigt werden. Demgegenüber ist der apparative Aufwand bei Gasbrennern geringer.

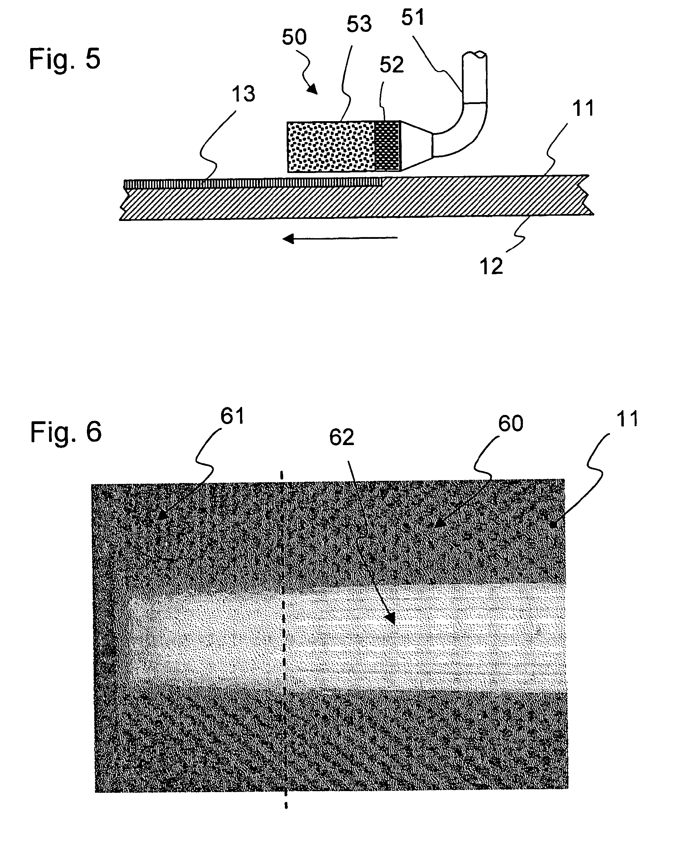

Um einen direkten Kontakt der Grünglas-Scheibe 10 mit den Flammen eines Gasbrenners zu vermeiden, kann vorteilhaft auch ein Porenbrenner als Einrichtung zur indirekten Beheizung verwendet werden. Ein Ausführungsbeispiel einer Einrichtung zum Feuerpolieren mit einem Porenbrenner als Variante des in Fig. 4 dargestellten Ausführungsbeispiels zeigt Fig. 5. Das Grünglas-Substrat 10 wird entlang der mit dem Pfeil gekennzeichneten Vorschubrichtung an einem Porenbrenner 50 vorbeibewegt, wobei die zu polierende Fläche 11 dem Porenbrenner 50 zugewandt ist.

Der Porenbrenner 50 umfasst eine Gaszufuhr, mit welcher Brenngas einem feinporigen Material 52 zugeführt wird. In diesem Material erfolgt eine Vorheizung des Brenngases. Anschließend durchströmt das Brenngas ein grobporiges Material 53, in welchem die Verbrennung erfolgt. Das grobporige Material 53 gibt Verbrennungswärme an die Grünglas-Scheibe 10 ab. Durch den gleichzeitigen Wärmetransport entlang des porösen Materials 53 wird gleichzeitig die Reaktionszone stabilisiert und breitet sich entlang dieses Materials aus. Damit wird eine großflächige Heizfläche zur Heizung der Grünglas-Scheibe 10 erreicht. Als grobporiges Material 53 kommt beispielsweise eine poröse Glaskeramik in Betracht. Die maximal erreichbare Temperatur beträgt im allgemeinen etwa 1400 °C. Erreichbare thermische Flächenleistungen einer derartigen Einrichtung liegen im Bereich um 1000 kW/m². Damit kann eine ausreichende Erwärmung der Fläche 11 erreicht werden, da die Wärme bei einem Porenbrenner aufgrund der großflächigen Heizfläche im wesentlichen nicht lateral entlang der Fläche 11 in der Grünglas-Scheibe fließen kann. Damit kann die Wärme im wesentlichen nur senkrecht zur Fläche 11 in die Scheibe 10 hinein abfließen. Zudem kann auch eine Vorheizung auf hoher Temperatur aufgrund des vorangegangenen Heißformprozesses ausgenutzt werden.

Fig. 6 zeigt eine photographische Aufnahme der Oberfläche einer erfindungsgemäß behandelten Grünglas-Scheibe 10. Die aufgenommene Fläche 11 ist dabei teilweise mittels eines Gasbrenners feuerpoliert worden. Der mit dem Brenner feuerpolierte Bereich 60 und ein benachbarter unbehandelter Bereich 61 sind deutlich zu unterscheiden. Die Grenze zwischen den Bereichen 60, 61 ist dabei mit einer eingezeichneten gestrichelten Linie verdeutlicht. Insbesondere anhand eines Lichtreflexes 62 zeigt sich, dass die Oberfläche im feuerpolierten Bereich 60 wesentlich glatter als im unbehandelten Bereich 61 ist. Der unbehandelte Bereich, so wie er durch Walzen bei der Heißformung erhalten wird, erscheint gegenüber dem feuerpolierten Bereich 60 matt. Demgegenüber ist der Rand des Lichtreflexes auf dem feuerpolierten Bereich 60 schärfer und es sind Streifen innerhalb des Reflexes zu erkennen, die von der Struktur des Reflexionskörpers der Beleuchtungsquelle stammen.

Es ist dem Fachmann ersichtlich, dass die Erfindung nicht auf die vorstehend beschriebenen beispielhaften Ausführungsformen beschränkt ist, sondern vielmehr in vielfältiger Weise variiert werden kann. Insbesondere können die Merkmale der einzelnen Ausführungsbeispiele auch miteinander kombiniert werden.

## Patentansprüche

1. Verfahren zur Herstellung von Glaskeramik-Scheiben, bei welchem eine Grünglas-Scheibe (5, 10) durch Heißformung hergestellt und die Grünglas-Scheibe (5, 10) anschließend zu einer Glaskeramik keramisiert wird, **dadurch gekennzeichnet, dass** die Grünglas-Scheibe (5, 10) vor der Keramisierung auf zumindest einer Fläche (11, 12) feuerpoliert wird, wobei das Heißformen der Scheibe (10) das Walzen einer Scheibe (10) umfasst und das Feuerpolieren nach dem Walzen durchgeführt wird.

2. Verfahren gemäß Anspruch 1, **dadurch gekennzeichnet, daß** durch die Heißformung ein kontinuierliches Grünglas-Band (5) hergestellt und das Grünglas-Band feuerpoliert wird.

3. Verfahren gemäß einem der vorstehenden Ansprüche, **dadurch gekennzeichnet, daß** das Feuerpolieren zumindest teilweise vor dem Einführen in einen Kühlofen erfolgt.

4. Verfahren gemäß einem der vorstehenden Ansprüche, **dadurch gekennzeichnet, daß** die Grünglas-Scheibe während der Abkühlung nach der Heißformung vor Erreichen einer Temperatur, bei welcher Keimbildung einsetzt, feuerpoliert wird.

5. Verfahren gemäß einem der vorstehenden Ansprüche, **dadurch gekennzeichnet, dass** die Grünglas-Scheibe (10) bei der Feuerpolitur so erwärmt wird, dass die zu polierende Fläche (11, 12) der Grünglas-Scheibe (10) heißer wird, als innere Bereiche der Grünglas-Scheibe (10).

6. Verfahren gemäß Anspruch 1 oder 2, **dadurch gekennzeichnet, dass** die Erwärmung bei der Feuerpolitur so durchgeführt wird, dass die Grünglas-Scheibe (10) formstabil bleibt.

7. Verfahren gemäß einem der vorstehenden Ansprüche, **dadurch gekennzeichnet, dass** die Grünglas-Scheibe (10) beidseitig feuerpoliert wird.

8. Verfahren gemäß einem der vorstehenden Ansprüche, **dadurch gekennzeichnet, dass** das Feuerpolieren das Erwärmen der zu polierenden Fläche (11, 12) mit einem Gasbrenner (32) umfasst.

9. Verfahren gemäß einem der vorstehenden Ansprüche, **dadurch gekennzeichnet, daß** das Feuerpolieren das Erwärmen der zu polierenden Fläche (11, 12) mit einem Porenbrenner (50) umfaßt.

10. Verfahren gemäß einem der vorstehenden Ansprüche, **dadurch gekennzeichnet, dass** das Feuerpolieren das oberflächliche Aufschmelzen bei vorgeheizter Grünglas-Scheibe (10) umfasst.

11. Verfahren gemäß Anspruch 10, **dadurch gekennzeichnet, dass** die Grünglas-Scheibe (10) beim Feuerpolieren auf zumindest 500 °C vorgeheizt ist.

12. Verfahren gemäß einem der vorstehenden Ansprüche, **dadurch gekennzeichnet, dass** die Grünglas-Scheibe (10) zum Feuerpolieren oberflächlich auf zumindest 900 °C, bevorzugt über 1000 °C erhitzt wird.

13. Verfahren gemäß einem der vorstehenden Ansprüche, **dadurch gekennzeichnet, dass** das Feuerpolieren das Erwärmen der zu polierenden Fläche (11, 12) mit einem elektrisch beheizten Strahler umfasst.

14. Verfahren gemäß einem der vorstehenden Ansprüche, **dadurch gekennzeichnet, daß** das Feuerpolieren das Erwärmen der zu polierenden Fläche (11, 12) mit einem Porenbrenner (50) umfaßt.

15. Verfahren gemäß einem der vorstehenden Ansprüche, **dadurch gekennzeichnet, dass** die Grünglas-Scheibe (10) vor dem Einführen in einen Keramisierungsofen (20) feuerpoliert wird.

16. Verfahren gemäß einem der vorstehenden Ansprüche, **dadurch gekennzeichnet, dass** das Feuerpolieren zumindest teilweise in einem Keramisierungsofen (20) durchgeführt wird.

17. Verfahren zur Herstellung einer Grünglas-Scheibe als Zwischenprodukt für die Glaskeramik-Herstellung, bei welchem eine Grünglas-Scheibe (10) durch Walzen hergestellt und die Grünglas-Scheibe (10) auf zumindest einer Fläche (11, 12) feuerpoliert wird.

18. Vorrichtung (1) zur Herstellung von Glaskeramik-Scheiben (40), insbesondere zur Durchführung eines Verfahrens gemäß einem der vorstehenden Ansprüche, umfassend eine Heißform-Vorrichtung (3) zur Herstellung von Grünglas-Scheiben (10) mittels einer Walzeinrichtung und einen Keramisierungsofen (20) zur Keramisierung der Grünglas-Scheiben (10), **gekennzeichnet durch** eine Einrichtung zum Feuerpolieren zumindest einer Oberfläche (11, 12) von mit der Heißform-Vorrichtung (3) geformten Grünglas-Scheiben (10), **dadurch** gekennzeichnet, dass die Einrichtung zum Feuerpolieren der Heißform-Vorrichtung nachgeschaltet und dem Keramisierungsofen (20) vorgeschaltet ist.

19. Vorrichtung gemäß dem vorstehenden Anspruch, **dadurch gekennzeichnet, daß** die Einrichtung zum Feuerpolieren so ausgebildet ist, daß die zu polierenden Fläche der Grünglas-Scheibe (10) heißer wird, als innere Bereiche der Grünglas-Scheibe (10).

20. Vorrichtung gemäß einem der vorstehenden Ansprüche, **dadurch gekennzeichnet, dass** die Einrichtung zum Feuerpolieren einen Gasbrenner (32) umfasst.

21. Vorrichtung gemäß einem der vorstehenden Ansprüche, **dadurch gekennzeichnet, dass** die Einrichtung zum Feuerpolieren einen Porenbrenner (50) umfasst.

22. Vorrichtung gemäß einem der vorstehenden Ansprüche, **dadurch gekennzeichnet, dass** die Einrichtung zum Feuerpolieren einen elektrisch beheizten Strahler umfasst.

23. Vorrichtung gemäß einem der vorstehenden Ansprüche, **gekennzeichnet durch** eine Einrichtung zum Vorheizen der Grünglas-Scheibe (10), insbesondere zum Vorheizen auf eine Temperatur von zumindest 500 °C.

24. Vorrichtung gemäß einem der vorstehenden Ansprüche, **gekennzeichnet durch** eine Einrichtung zum beidseitigen Feuerpolieren der Grünglas-Scheibe (10).

25. Vorrichtung gemäß einem der vorstehenden Ansprüche, **gekennzeichnet durch** einen der Heißform-Vorrichtung nachgeschalteten Kühlofen, wobei die Einrichtung zum Feuerpolieren für das Feuerpolieren zumindest einer Oberfläche von mit der Heißform-Vorrichtung geformten Scheiben vor dem Einführen in den Kühlofen ausgebildet ist.

26. Zwischenprodukt für die Herstellung von Glaskeramik-Scheiben, umfassend eine gewalzte, auf zumindest einer Seite feuerpolierte Grünglas-Scheibe (10).

## Claims

1. A method for producing glass ceramics panels in which a green glass panel (5,10) is produced by means of hot-forming, and the green glass panel (5, 10) is subsequently ceramized to form a glass ceramics, **characterized in that** the green glass panel (5, 10) is fire-polished on at least one surface (11, 12) before ceramization, wherein hot-forming the panel (10) comprises rolling the panel (10), and fire-polishing is performed after rolling.

2. The method according to claim 1, **characterized in that** a continuous green glass ribbon (5) is produced, and the green glass ribbon is fire-polished.

3. The method according to one of the preceding claims, **characterized in that** fire-polishing is at least partially performed before feeding into a leer.

4. The method according to one of the preceding claims, **characterized in that** the green glass panel is fire-polished during cooling, after hot-forming before achieving a temperature at which nucleation starts.

5. The method according to one of the preceding claims, **characterized in that** the green glass panel (10) is heated during fire-polishing such that the surface (11, 12) of the green glass panel (10), to be polished gets hotter than interior regions of the green glass panel (10).

6. The method according to one of claim 1 or 2, **characterized in that** heating during fire-polishing is performed such that the green glass panel (10) remains dimensionally stable.

7. The method according to one of the preceding claims, **characterized in that** the green glass panel (10) is fire-polished on both sides.

8. The method according to one of the preceding claims, **characterized in that** fire-polishing comprises heating the surface (11, 12) to be polished, by means of a gas burner (32).

9. The method according to one of the preceding claims, **characterized in that** fire-polishing comprises heating the surface (11, 12) to be polished, by means of a porous burner (50).

10. The method according to one of the preceding claims, **characterized in that** fire-polishing comprises superficially fusing of the preheated green glass panel (10).

11. The method according to claim 10, **characterized in that** the green glass panel (10) is preheated to at least 500 °C during fire-polishing.

12. The method according to one of the preceding claims, **characterized in that** the green glass panel (10) is superficially heated to at least 900 °C, preferably to above 1000 °C for fire-polishing.

13. The method according to one of the preceding claims, **characterized in that** fire-polishing comprises heating the surface (11, 12) to be polished by means of an electrically heated heater.

14. The method according to one of the preceding claims, **characterized in that** fire-polishing comprises heating the surfaces (11, 12) to be polished, by means of a porous burner (50).

15. The method according to one of the preceding claims, **characterized in that** the green glass panel (10) is fire-polished before being fed into a ceramization furnace (20).

16. The method according to one of the preceding claims, **characterized in that** fire-polishing is at least partially performed in a ceramization furnace (20).

17. A method for producing a green glass panel as intermediate product for the glass ceramics production, wherein a green glass panel (10) is produced by means of rolling, and the green glass panel (10) is fire-polished on at least one surface (11, 12).

18. An apparatus (1) for producing glass ceramics panels (40), in particular for performing a method according to one of the preceding claims, the apparatus comprising a hot-forming device for producing green glass panels (10) by means of a rolling device and a ceramization furnace for ceramizing the green glass panels (10), **characterized by** a device for fire-polishing at least one surface (11, 12) of the green glass panels (10) formed by means of the hot-forming device, **characterized in that** the device for fire-polishing is installed downstream of the hot-forming device, and upstream of the ceramization furnace (20).

19. The apparatus according to the preceding claim, **characterized in that** the device for fire-polishing is adapted such that the surface of the green glass panel (10), to be polished gets hotter than interior regions of the green glass panel (10).

20. The apparatus according to one of the preceding claims, **characterized in that** the device for fire-polishing comprises a gas burner (32).

21. The apparatus according to one of the preceding claims, **characterized in that** the device for fire-polishing comprises a porous burner (50).

22. The apparatus according to one of the preceding claims, **characterized in that** the device for fire-polishing comprises an electrically heated heater.

23. The apparatus according to one of the preceding claims, **characterized by** a device for pre-heating the green glass panel (10), in particular for pre-heating to a temperature of at least 500 °C.

24. The apparatus according to one of the preceding claims, **characterized by** device for fire-polishing the green glass panel (10) on both sides.

25. The apparatus according to one of the preceding claims, **characterized by** a leer installed downstream of the hot-forming device, wherein the device for fire-polishing is adapted for fire-polishing at least one surface of panels formed by means of the hot-forming device, before feeding into the leer.

26. An intermediate product for producing glass ceramics panel, the intermediate product comprising a rolled, on at least one surface fire-polished green glass panel (10).

## Revendications

1. Procédé de fabrication de vitres en vitrocéramique, dans lequel une vitre en verre vert (5, 10) est fabriquée par thermoformage et la vitre en verre vert (5, 10) est ensuite céramisée en vitrocéramique, **caractérisé en ce que** la vitre en verre vert (5, 10) est polie au feu sur au moins une surface (11, 12) avant la céramisation, le thermoformage de la vitre (10) comprenant le laminage d'une vitre (10) et le polissage au feu étant effectué après laminage.

2. Procédé selon la revendication 1, **caractérisé en ce qu'**une bande de verre vert (5) est fabriquée par thermoformage et la bande de verre vert est poli au feu.

3. Procédé selon l'une des revendications précédentes, **caractérisé en ce que** le polissage au feu est effectué au moins en partie avant l'introduction dans un four à recuire.

4. Procédé selon l'une des revendications précédentes, **caractérisé en ce que** la vitre en verre vert est polie au feu pendant le refroidissement suivant le thermoformage avant d'atteindre une température où se produit une germination.

5. Procédé selon l'une des revendications précédentes, **caractérisé en ce que** la vitre en verre vert (10) est chauffée pendant le polissage au feu de telle manière que la surface (11, 12) à polir de la vitre en verre vert (10) devienne plus chaude que des zones intérieures de la vitre en verre vert (10).

6. Procédé selon la revendication 1 ou 2, **caractérisé en ce que** le chauffage lors du polissage au feu est effectué de telle manière que la vitre en verre vert (10) conserve une forme stable.

7. Procédé selon l'une des revendications précédentes, **caractérisé en ce que** la vitre en verre vert (10) est polie au feu sur ses deux faces.

8. Procédé selon l'une des revendications précédentes, **caractérisé en ce que** le polissage au feu comprend le chauffage de la surface (11, 12) à polir avec un brûleur à gaz (32).

9. Procédé selon l'une des revendications précédentes, **caractérisé en ce que** le polissage au feu comprend le chauffage de la surface (11, 12) à polir avec un brûleur à corps poreux (50).

10. Procédé selon l'une des revendications précédentes, **caractérisé en ce que** le polissage au feu comprend la fusion superficielle en cas de vitre en verre vert (10) préchauffée.

11. Procédé selon la revendication 10, **caractérisé en ce que** la vitre en verre vert (10) est préchauffée à au moins 500°C lors du polissage au feu.

12. Procédé selon l'une des revendications précédentes, **caractérisé en ce que** la vitre en verre vert (10) est chauffée superficiellement à au moins 900°C, préférentiellement à plus de 1000°C pour le polissage au feu.

13. Procédé selon l'une des revendications précédentes, **caractérisé en ce que** le polissage au feu comprend le chauffage de la surface (11, 12) à polir avec un radiateur électrique.

14. Procédé selon l'une des revendications précédentes, **caractérisé en ce que** le polissage au feu comprend le chauffage de la surface (11, 12) à polir avec un brûleur à corps poreux (50).

15. Procédé selon l'une des revendications précédentes, **caractérisé en ce que** la vitre en verre vert (10) est polie au feu avant introduction dans un four de céramisation (20).

16. Procédé selon l'une des revendications précédentes, **caractérisé en ce que** le polissage au feu est effectué au moins en partie dans un four de céramisation (20).

17. Procédé de fabrication d'une vitre en verre vert en tant que produit intermédiaire pour la fabrication de vitrocéramique, dans lequel une vitre en verre vert (10) est fabriquée par laminage et la vitre en verre vert (10) est polie au feu sur au moins une surface (11, 12).

18. Installation (1) pour la fabrication de vitres en vitrocéramique (40), en particulier pour l'exécution d'un procédé selon l'une des revendications précédentes, comprenant une installation de thermoformage (3) pour la fabrication de vitres en verre vert (10) au moyen d'un dispositif de laminage et un four de céramisation (20) pour la céramisation des vitres en verre vert (10), **caractérisée par** un dispositif pour le polissage au feu d'au moins une surface (11, 12) de vitres en verre vert (10) formées par l'installation de thermoformage (3), **caractérisée en ce que** le dispositif de polissage au feu est situé en aval de l'installation de thermoformage et en amont du four de céramisation (20).

19. Installation selon la revendication précédente, **caractérisée en ce que** le dispositif de polissage au feu est réalisé de telle manière que la surface à polir de la vitre en verre vert (10) devienne plus chaude que des zones intérieures de la vitre en verre vert (10).

20. Installation selon l'une des revendications précédentes, **caractérisée en ce que** le dispositif de polissage au feu comprend un brûleur à gaz (32).

21. Installation selon l'une des revendications précédentes, **caractérisée en ce que** le dispositif de polissage au feu comprend un brûleur à corps poreux (50).

22. Installation selon l'une des revendications précédentes, **caractérisée en ce que** le dispositif de polissage au feu comprend un radiateur électrique.

23. Installation selon l'une des revendications précédentes, **caractérisée par** un dispositif pour le préchauffage de la vitre en verre vert (10), en particulier pour le préchauffage à une température d'au moins 500°C.

24. Installation selon l'une des revendications précédentes, **caractérisée par** un dispositif de polissage au feu de la vitre en verre vert (10) sur ses deux surfaces.

25. Installation selon l'une des revendications précédentes, **caractérisée par** un four à recuire situé en aval de l'installation de thermoformage, le dispositif de polissage au feu étant réalisé pour le polissage au feu d'au moins une surface des vitres formées par l'installation de thermoformage avant introduction dans le four à recuire.

26. Produit intermédiaire pour la fabrication de vitres en vitrocéramique, comprenant une vitre en verre vert (10) laminée, polie au feu sur au moins une face.
